(19) **Europäisches Patentamt / European Patent Office / Office européen des brevets**

(11) **EP 4 209 766 A1**

(12) **EUROPEAN PATENT APPLICATION**
published in accordance with Art. 153(4) EPC

(43) Date of publication:
**12.07.2023 Bulletin 2023/28**

(21) Application number: **20952616.9**

(22) Date of filing: **27.11.2020**

(51) International Patent Classification (IPC):
*G01M 3/24* (2006.01)     *F17D 5/02* (2006.01)

(86) International application number:
**PCT/RU2020/000638**

(87) International publication number:
**WO 2022/050864 (10.03.2022 Gazette 2022/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.09.2020 RU 2020128921**

(71) Applicants:
• **Joint Stock Company "Rosenergoatom"**
  **Moscow 109507 (RU)**
• **NATIONAL RESEARCH NUCLEAR UNIVERSITY MEPHI**
  **(Moscow Engineering Physics Institute)**
  **Moscow 115409 (RU)**

• **Science and Innovations - Nuclear Industry Scientific Development, Private Enterprise Moscow, 119017 (RU)**

(72) Inventors:
• **ABIDOVA, Elena Aleksandrovna**
  **Volgodonsk, 347360 (RU)**
• **SINELSHCHIKOV, Pavel Vladimirovich**
  **Volgodonsk, 347383 (RU)**

(74) Representative: **Osmans, Voldemars et al**
  **Agency Tria Robit**
  **P.O. Box 22**
  **LV-1010 Riga (LV)**

(54) **METHOD FOR MONITORING FLUID-TIGHTNESS AND DETECTING LEAKS IN A PIPE WITH A VALVE**

(57) The invention relates to the field of technical diagnostics and can be used for inspection of pipelines for leak-tightness and detection of leaks in pipelines of nuclear power plants. Acoustic signals are recorded at two points along the pipeline length, and the received acoustic signals are subsequently processed. The acoustic signals are recorded within a broad ultrasonic range at two points along the pipeline length located on the pipeline downstream and upstream of a valve. The ultrasonic signals recorded at the point on the pipeline upstream of the valve and at the point downstream of the valve are then processed, and the values obtained are used to construct two signal spectra. Then the range of 15,000 to 90,000 Hz is isolated, and the highest amplitude value in both signal spectra is selected within this range. Then the amplitudes of the signal spectra within the said frequency range are divided by the highest amplitude value, and the difference between the signal spectra upstream and downstream of the valve is determined using a mathematical formula, thereby making it possible to determine the degree of the pipeline leak-tightness in order to assess the possibility for its further operation and also to improve the pipeline leak detection quality and effectiveness.

Fig. 1

**Description**

The invention relates to the field of technical diagnostics, particularly to the methods for monitoring of pipeline leak-tightness, and can be used for inspection of pipelines for leak-tightness and detection of leaks in pipelines of nuclear power plants.

Detection of coolant leaks is one of the most important objectives of technical diagnostics for equipment of nuclear power plants. At present, the ultrasonic method for monitoring of internal and external leaks has become the most widespread. Internal leaks are related to loss of leak-tightness in shut-off valves, and external leaks - to coolant leak through the damaged outer walls of structures. The existing approaches are based on the acoustic emission analysis for the equipment in operation as well as on calculation of the correlation function for a pair of measuring channels. However, this approach does not provide any objective parameters for quantitative assessment of a leak, and in some cases a decision of presence of any leak is made on the basis of subjective judgment and organoleptic perception of the background noise from the operating equipment.

A method for determination of the leak coordinate in pipelines (USSR invention certificate No. 1283566), involving receipt of acoustic signals at two points along the pipeline length, detection of the leak and subsequent correlation processing of the received acoustic signals resulting in determination of the difference in the acoustic signal arrival time and the leak coordinate, is known.

Drawbacks of this method include small length of the monitored pipeline section and impossibility to apply it in presence of any discrete interfering signals from the engineered facilities surrounding or crossing the pipeline.

A method for monitoring of leak-tightness and determination of the leak coordinate in a product pipeline (Russian utility patent No. 2181881), involving receipt of acoustic signals at two points along the product pipeline length, detection of the leak and subsequent correlation processing of the received acoustic signals resulting in determination of the difference in the acoustic signal arrival time and the leak coordinate, wherein prior to the correlation processing of the received acoustic signals, discrete components are rejected in each signal with subsequent spectral analysis of the latter, and long-term spectral components with a duration exceeding 30 seconds and an amplitude exceeding the background by 3-6 dB are isolated from the resultant signal spectra, and presence/ absence of any leak is determined on the basis of these spectral components, is the closest analogue of the claimed technical solution.

Low accuracy of measurement and subsequent processing of the received acoustic signals due to the impact of the pipeline geometry as well as presence of supports and cross-connections in the pipeline is a drawback of the closest analogue.

The objective achieved by the proposed invention is to determine the leak-tightness degree of a pipeline with a valve in order to assess the possibility for its further operation as well as to improve the pipeline leak detection quality and effectiveness.

The technical result achieved by this invention involves reduction of the diagnostic inspection duration and prevention of any impact of the pipeline geometry on the result obtained in the course of the diagnostic inspection.

The essence of the invention is that according to the method for monitoring of leak-tightness and detection of leaks in a pipeline with a valve, involving registration of acoustic signals at two points along the pipeline length and subsequent processing of the received acoustic signals, it is proposed to record the acoustic signals within a broad ultrasonic range at two points along the pipeline length located on the pipeline upstream and downstream of the valve, then to process the ultrasonic signals recorded at the pipeline point upstream of the valve and at the point downstream of the valve with the use of an analog-to-digital converter and to construct two signal spectra corresponding to the recording points based on the obtained i values with the use of Fourier transformation, then to isolate the range of 15,000 to 90,000 Hz within the plotted signal spectra and to select the highest amplitude value within this range in both signal spectra, then to divide the signal spectra amplitudes within the said frequency range by the highest amplitude value and to determine the difference between the signal spectra upstream and downstream of the valve according to the formula:

$$S = \sum_{i=1}^{n-1} \left| S_{2_i} - S_{1_i} \right|,$$

where $S_{1i}$ and $S_{2i}$ are the signal spectra amplitudes upstream and downstream of the valve respectively, $i$ and $n$ are the numbers of discrete components within the analyzed signal spectrum segments, then to make a conclusion on absence of any leaks based on the determined values in case of the difference S between the signal spectra of less than -100, or presence of a minor leak if the difference between the signal spectra is within the range of -100 to 100, or presence of a major leak in case of the difference between the signal spectra exceeding 100.

It is also proposed to record ultrasonic signals with the use of acoustic emission sensors.

The claimed invention is clarified with drawings. The flow chart of the method operations is presented in Fig. 1; the layout diagram of the sensors for monitoring of shut-off valves is shown in Fig. 2; the ultrasonic signal spectra at points 1 and 2 for two inspected shut-off valves are shown in Figs. 3 and 4.

The proposed method is embodied as follows.

Sensors for recording of ultrasonic signals, for example, GT400 acoustic emission sensors are installed on a pipeline upstream and downstream of a leak-tight component. The sensor installation points are be selected in the upper part of the pipeline cross-section, or in its lateral part. No sensor installation points are selected in the lower part of the pipeline cross-section due to possible distortion of the acoustic signal because of potential presence of any deposits.

Then acoustic signals are recorded within a broad ultrasonic range. Then the recorded ultrasonic signals are processed with the use of an analog-to-digital converter, and two signal spectra corresponding to the recording points are constructed based on the obtained values with the use of Fourier transformation.

Then the range of 15,000 to 90,000 Hz is isolated within the plotted signal spectra as natural vibrations of the pipeline manifest at lower frequencies, and spurious peaks appear at higher frequencies due to acoustic sensor operation peculiarities.

Then the highest amplitude value within this range is selected in both signal spectra, and the signal spectra amplitudes within the said frequency range are divided by the highest amplitude value.

The difference between the signal spectra upstream and downstream of the valve is determined according to the formula:

$$S = \sum_{i=1}^{n-1} \left| S_{2_i} - S_{1_i} \right|,$$

where $S_{1i}$ and $S_{2i}$ are the signal spectra amplitudes upstream and downstream of the valve respectively; $i$ and $n$ are the numbers of discrete components within the analyzed signal spectrum segments.

A conclusion on absence of any leaks is made based on the determined value in case of the difference S between the signal spectra of less than -100, or presence of a minor leak if the difference between the signal spectra is within the range of -100 to 100, or presence of a major leak in case of the difference between the signal spectra exceeding 100.

The described method was applied at Novovoronezh NPP for examination of the valves in the feedwater supply system on the bypass and recirculation lines.

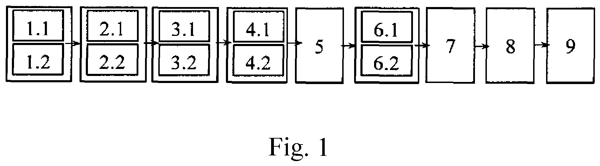

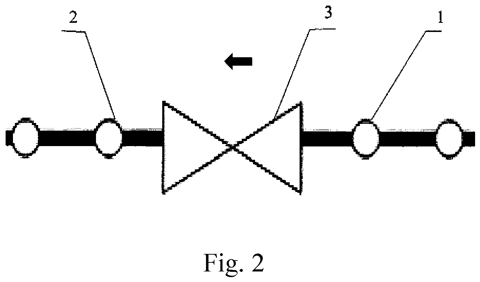

In accordance with the claimed method implementation flow chart presented in Fig. 1, acoustic signals were measured upstream (item 1.1) and downstream (item 1.2) of the installed valve. The layout diagram of the measurement points is shown in Fig. 2. The numbers of the measurement points are designated with digits: 1 and 2. The medium flow direction is designated with an arrow.

The signals received with the use of a GT400 acoustic sensor were analyzed. Recording was performed at two points: at point 1 upstream and point 2 downstream of the valve 3.

The inspected shut-off valve (valve 3) was intended to cut off the water flow under the pressure of 8 MPa and at the temperature of 160°C.

Subsequent to measurement of acoustic signals at points 1 and 2, the received signals recorded upstream (item 2.1) and downstream (item 2.2) of the valve 3 were digitalized. Then the spectra of the digitalized signals recorded upstream and downstream of the installed valve 3 were calculated (items 3.1 and 3.2 in Fig. 1). The fast Fourier transformation size of 1684, the Hann weight function and the averaging of 75% were set for calculation of the current spectrum.

Then the range of 20,000 to 80,000 Hz was isolated within the spectra of digitalized signals (items 4.1 and 4.2 in Fig. 1) recorded at points 1 and 2 upstream and downstream of the valve 3. The highest amplitude was selected within the specified range of both digitalized signal spectra.

Then the spectra of digitalized signals recorded upstream (item 6.1) and downstream (item 6.2) of the valve 3 were divided by the highest amplitude value, and then the amplitudes of the normalized digitalized signal spectra recorded upstream and downstream of the valve 3 were subtracted. Then the differences in the amplitudes of the normalized digitalized signal spectra recorded upstream and downstream of the valve 3 were summarized.

The difference between the signal spectra upstream and downstream of the valve 3 was determined according to the formula:

$$S = \sum_{i=1}^{n-1} \left| S_{2_i} - S_{1_i} \right|,$$

where $S_{1i}$ and $S_{2i}$ are the signal spectra amplitudes upstream and downstream of the valve respectively; $i$ and $n$ are the numbers of discrete components within the analyzed signal spectrum segments.

The state of the valve was identified on the basis of the resultant spectra according to the aggregate difference of amplitudes under the following condition: the difference of less than - 100 is treated as "absence of any leaks", the parameter within the range of -100 to 100 is interpreted as "a minor leak is possible", and the result exceeding 100 means "a major leak".

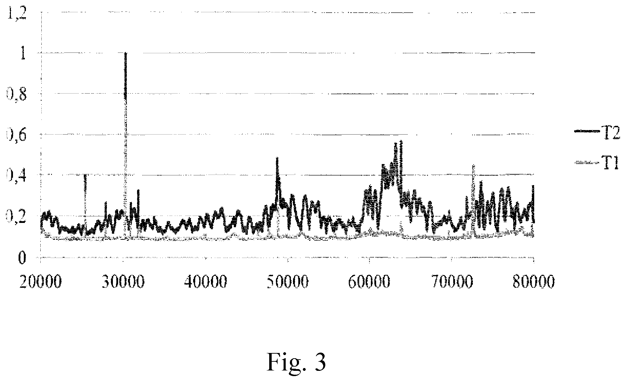

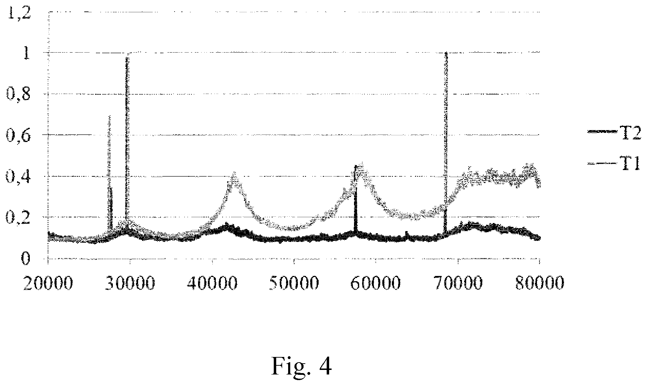

The ultrasonic signal spectra at points 1 and 2 of two inspected shut-off valves are shown in Figs. 3 and 4. In this case overlapping of the normalized spectra upstream and downstream of the valve with leaks is shown in Fig. 3, and overlapping of the spectra upstream and downstream of the valve without any leaks - in Fig. 4. In the first case the spectra difference was S=759, and in the second case - S=-680. So, a conclusion was made on a major leak in the shut-off component of the first valve and absence of any leaks in the second valve.

The proposed method can be used at NPPs as well as for monitoring of leak-tightness of pipelines at enterprises and facilities of machine building, heat power engineering and other industries.

Application of the proposed method enables to determine the leak-tightness degree of a pipeline with a valve in order to assess the possibility for its further operation as well as to improve the pipeline leak detection quality and effectiveness.

**Claims**

1. A method for monitoring of leak-tightness and detection of leaks in a pipeline with a valve, involving registration of acoustic signals at two points along the pipeline length and subsequent processing of the received acoustic signals, **characterized in that** the acoustic signals are recorded within a broad ultrasonic range at two points along the pipeline length located on the pipeline upstream and downstream of the valve, then the ultrasonic signals recorded at the pipeline point upstream of the valve and at the point downstream of the valve are processed with the use of an analog-to-digital converter, and two signal spectra corresponding to the recording points are constructed based on the obtained values with the use of Fourier transformation, then the range of 15,000 to 90,000 Hz is isolated within the plotted signal spectra, and the highest amplitude value is selected within this range in both signal spectra, then the signal spectra amplitudes within the said frequency range are divided by the highest amplitude value, and the difference between the signal spectra upstream and downstream of the valve is determined according to the formula:

$$S = \sum_{i=1}^{n-1} \left| S_{2_i} - S_{1_i} \right|,$$

where $S_{1i}$ and $S_{2i}$ are the signal spectra amplitudes upstream and downstream of the valve respectively; $i$ and $n$ are the numbers of discrete components within the analyzed signal spectrum segments, and then a conclusion on absence of any leaks is made based on the determined value in case of the difference S between the signal spectra of less than -100, or presence of a minor leak if the difference between the signal spectra is within the range of -100 to 100, or presence of a major leak in case of the difference between the signal spectra exceeding 100.

2. The method for monitoring of leak-tightness and detection of leaks in a pipeline with a valve according to claim 1, **characterized in that** ultrasonic signals are recorded with the use of acoustic emission sensors.

| 1.1 | 2.1 | 3.1 | 4.1 | 5 | 6.1 | 7 | 8 | 9 |
|-----|-----|-----|-----|---|-----|---|---|---|
| 1.2 | 2.2 | 3.2 | 4.2 |   | 6.2 |   |   |   |

Fig. 1

Fig. 2

Fig. 3

Fig. 4

## INTERNATIONAL SEARCH REPORT

| | International application No. |
|---|---|
| | PCT/RU 2020/000638 |

**A.    CLASSIFICATION OF SUBJECT MATTER**
G01M 3/24 (2006.01); F17D 5/02 (2006.01)

According to International Patent Classification (IPC) or to both national classification and IPC

**B.    FIELDS SEARCHED**

Minimum documentation searched (classification system followed by classification symbols)
F17D 5/00-5/06, G01M 3/00-3/40

Documentation searched other than minimum documentation to the extent that such documents are included in the fields searched

Electronic data base consulted during the international search (name of data base and, where practicable, search terms used)
PatSearch (RUPTO Internal), USPTO, PAJ, Espacenet, Information Retrieval System of FIPS

**C.    DOCUMENTS CONSIDERED TO BE RELEVANT**

| Category* | Citation of document, with indication, where appropriate, of the relevant passages | Relevant to claim No. |
|---|---|---|
| A | US 6134949 A (CRANE NUCLEAR, INC) 24.10.2000, column 3, lines 3-29, column 5, lines 42-51 | 1-2 |
| D, A | RU 2181881 C2 (OAO GAZPROM" et al.) 27.04.2002, the claims | 1-2 |
| A | JPS 6243534 A (NIPPON KOKAN KK) 25.02.1987, the abstract | 1-2 |

☐  Further documents are listed in the continuation of Box C.          ☐  See patent family annex.

| * Special categories of cited documents: | |
|---|---|
| "A"  document defining the general state of the art which is not considered to be of particular relevance | "T"  later document published after the international filing date or priority date and not in conflict with the application but cited to understand the principle or theory underlying the invention |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
|---|---|
| 18 June 2021 (18.06.2021) | 01 July 2021 (01.07.2021) |

| Name and mailing address of the ISA/ RU | Authorized officer |
|---|---|
| Facsimile No. | Telephone No. |

Form PCT/ISA/210 (second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2181881